(19) Europäisches Patentamt
European Patent Office
Office européen des brevets

(11) **EP 2 087 369 B1**

(12) **EUROPÄISCHE PATENTSCHRIFT**

(45) Veröffentlichungstag und Bekanntmachung des Hinweises auf die Patenterteilung:
**26.10.2016 Patentblatt 2016/43**

(21) Anmeldenummer: **07846921.0**

(22) Anmeldetag: **30.11.2007**

(51) Int Cl.:
*G01S 13/93* (2006.01)　　*B60Q 1/48* (2006.01)
*B62D 15/02* (2006.01)　　*B60W 30/06* (2006.01)

(86) Internationale Anmeldenummer:
**PCT/EP2007/010396**

(87) Internationale Veröffentlichungsnummer:
**WO 2008/067953 (12.06.2008 Gazette 2008/24)**

(54) **VERFAHREN ZUM BETRIEB EINES PARKHILFESYSTEMS**

METHOD FOR THE OPERATION OF A PARKING AID SYSTEM

PROCÉDÉ POUR FAIRE FONCTIONNER UN SYSTÈME D'AIDE AU STATIONNEMENT

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **08.12.2006 DE 102006057879**

(43) Veröffentlichungstag der Anmeldung:
**12.08.2009 Patentblatt 2009/33**

(73) Patentinhaber: **Valeo Schalter und Sensoren GmbH**
**74321 Bietigheim-Bissingen (DE)**

(72) Erfinder:
 • **JECKER, Nicolas**
 **73728 Esslingen (DE)**
 • **VOVKUSHEVSKY, Vsevolod**
 **74321 Bietigheim-Bissingen (DE)**

(56) Entgegenhaltungen:
| | |
|---|---|
| EP-A- 1 484 620 | EP-A- 1 655 206 |
| EP-A1- 1 679 526 | EP-A1- 1 683 707 |
| WO-A-2004/053812 | WO-A1-2006/090736 |
| DE-A1- 10 343 331 | DE-A1- 10 361 315 |
| DE-A1-102004 046 589 | DE-A1-102005 015 396 |

**Beschreibung**

Die Erfindung betrifft ein Verfahren zum Betrieb eines Parkhilfesystems eines Kraftfahrzeugs, wobei insbesondere mit Hilfe von Sensoren Koordinaten von Hindernissen in der Umgebung des Kraftfahrzeugs ermittelt werden.

Solche Verfahren sind beispielsweise aus der EP 0 305 907 A1, aus der EP 1 428 722 A2 und aus der WO 2004/042423 A1 bekannt. Bei diesen Verfahren werden Hindernisse in der Umgebung des Kraftfahrzeugs mit Hilfe geeigneter Sensoren, beispielsweise mit Hilfe von Ultraschallsensoren, erfasst. Auf diese Weise können den einzelnen Hindernissen Hindernisgrenzen zugeordnet werden, um zu prüfen, ob zwischen Begrenzungen verschiedener Hindernisse genügend Parkfläche verbleibt, um ein Kraftfahrzeug einparken zu können.

WO 2006/090736 A1 beschreibt eine Objekterkennungsvorrichtung, die die Form eines Objekts, insbesondere eines geparkten Fahrzeugs, in der Umgebung eines Fahrzeugs erkennen kann.

EP 1 679 713 A1 offenbart eine Objekterfassungsvorrichtung mit einer Objekterkennungseinheit, die das Vorhandensein eines Objekts, insbesondere eines Fahrzeugs, basierend auf einer Punktesequenz detektiert und mit einer Näherungseinheit, die eine Näherung der Punktesequenz ausgibt durch Anwenden einer Kurve oder einer geraden Linie, so dass eine Näherungskurve oder eine Näherungslinie erhalten wird. Auch EP 1 683 707 A1 offenbart eine ähnliche Vorrichtung.

Der vorliegenden Erfindung liegt die Aufgabe zugrunde, die bekannten Verfahren so zu verbessern, dass auch Parkräume möglichst optimal genutzt werden können, die von komplex geformten Hindernisgrenzen, insbesondere von einer gekrümmten Bordsteinkante, begrenzt sind.

Diese Aufgabe wird durch ein Verfahren nach Anspruch 1 gelöst.

Mit dem erfindungsgemäßen Verfahren können auch Begrenzungen von komplex geformten Hindernissen erfasst werden. Dies ist beispielsweise hilfreich, wenn ein Fahrzeug in einer Parklücke geparkt werden soll, die sich zwischen zwei weiteren parkenden Autos entlang einer gekrümmten Bordsteinkante erstreckt. Solche Parksituationen können sich insbesondere in Wohngegenden und in einer hügeligen Umgebung ergeben.

Bei den bisher bekannten Verfahren führte die Tatsache, dass Hindernisse modellhaft mit Hilfe von gradlinigen Begrenzungen abgebildet wurden, dazu, dass aus Sicherheitsgründen gegenüber dem tatsächlichen Parkraum ein verkleinerter Parkraum angenommen werden musste. Mit Hilfe des gekrümmten Koordinatenverlaufs kann einem Parkhilfesystem eine der Wirklichkeit besser entsprechende Abbildung mit einem vergrößerten Parkräume zur Verfügung gestellt werden. Dies hat auch den Vorteil, dass eine bei automatisierten Parkhilfesystemen vorzuschlagende Trajektorie für das einzuparkende Auto optimiert werden kann.

Es ist prinzipiell möglich, den gekrümmten Koordinatenverlauf durch eine beliebig komplexe Kurvenfunktion abzubilden. Um jedoch die erforderliche Rechenleistung des Parkhilfesystems zu begrenzen, wird vorgeschlagen, dass der Koordinatenverlauf so bestimmt wird, dass er dem Teilstück eines Kreises entspricht. Dies ist weiter unten noch detaillierter beschrieben.

Erfindungsgemäß wird für jede Koordinate der Wert der an dieser Koordinate anliegenden Steigung bestimmt. Hierfür sind mindestens zwei Koordinaten erforderlich, um ein Steigungsdreieck bilden zu können. In entsprechender Weise wird für jede Koordinate der Wert der an dieser Koordinaten anliegenden Krümmung bestimmt. Hierfür sind insgesamt mindestens drei Koordinaten erforderlich, um auf Basis von mindestens zwei Steigungswerten einen Krümmungswert bestimmen zu können.

Die Krümmung des Koordinatenverlaufs ist bestimmt durch:

$$k_i = \frac{y_i''}{\left(1 + y_i'^2\right)^{\frac{3}{2}}} \qquad \text{(Gleichung (1))}$$

Die Berechnung dieser Krümmung ermöglicht es, auf Basis der zuvor bestimmten Steigungs- und Krümmungswerte die Krümmung an jeder Koordinate eines Koordinatenverlaufs bestimmen zu können.

Um nun einen Koordinatenverlauf bestimmen zu können, die sich mit einer vergleichsweise einfachen Kreisgleichung beschreiben lässt, wird die Krümmung mit Hilfe von Gleichung 1 für eine Anzahl N von Koordinaten jeweils einzeln zu bestimmen und hieraus mit Hilfe der Gleichung:

$$k_{avg} = \frac{\sum_{i=1}^{N} k_i}{N} \qquad \text{(Gleichung (2))}$$

eine durchschnittliche Krümmung zu ermitteln. Mit Hilfe der wie vorstehend beschrieben ermittelten durchschnittlichen Krümmung des Koordinatenverlaufs wird der Radius R des Koordinatenverlaufs bestimmt durch:

$$R = \frac{1}{\left| k_{avg} \right|} . \qquad \text{(Gleichung ((3))}$$

In Kenntnis des Radius R des Koordinatenverlaufs ist es möglich, mit Hilfe von mindestens zwei Koordinaten die Lage des Mittelpunkts eines Kreises zu bestimmen. Hierfür können geometrische Verfahren, beispielsweise eine Triangulation, angewendet werden. Wenn nun auf diese Weise der Mittelpunkt M eines Kreises ermittelt wurde und der Radius R dieses Kreises bekannt ist, ist der zu bestimmende Koordinatenverlauf gleich dem Teilstück eines Kreises. Dieser Koordinatenverlauf entspricht dann zumindest annähernd dem Verlauf eines Hindernisses mit einer gekrümmten Begrenzung.

Zur Bestimmung des Koordinatenverlaufs können die von einem einzelnen Hindernis ermittelten Koordinaten verwendet werden. Dieses einzelne Hindernis kann beispielsweise die im Bereich zwischen zwei parkenden Autos entlang einer Parklücke verlaufende, gekrümmte Bordsteinkante einer Straße sein. Es ist aber auch möglich, dass sich das einzelne Hindernis in eine Straße oder einen Parkraum hineinerstreckt, wie dies beispielsweise bei einem Blumenkübel der Fall sein kann.

Es ist auch möglich, die Koordinaten zur Vorbereitung der Bestimmung des Koordinatenverlaufs zu filtern. Mit Hilfe eines solchen Filters, beispielsweise einem Tiefpassfilter, können die Koordinaten einander angeglichen werden, so dass zueinander benachbarte Koordinaten in einem schmaleren Band liegen als sich dies durch Messung der Koordinaten ergibt.

Um sicherstellen zu können, dass der wie vorstehend beschrieben bestimmte Koordinatenverlauf dem tatsächlichen Verlauf des Hindernisses zumindest annähernd entspricht, wird vorgeschlagen, nach Bestimmung des Koordinatenverlaufs zu prüfen, ob eine der mit Hilfe der Sensoren ermittelte Koordinate mit dem bestimmten Koordinatenverlauf korreliert. Hierfür kann beispielsweise geprüft werden, wie weit eine oder mehrere Koordinaten von dem berechneten Koordinatenverlauf abweichen. Bei Überschreitung einer zugelassenen Abweichung ist es dann möglich, auf aus dem Stand der Technik bekannte gradlinige Begrenzungsverläufe zurückzugreifen.

Die Erfindung betrifft ferner ein Parkhilfesystem für Kraftfahrzeuge, das zur Durchführung eines vorstehend beschriebenen Verfahrens ausgebildet ist.

Weitere Vorteile, Merkmale und Einzelheiten der Erfindung ergeben sich aus der nachfolgenden Beschreibung, in der unter Bezugnahme auf die Zeichnung ein besonders bevorzugtes Ausführungsbeispiel im Einzelnen beschrieben ist. Dabei können die in der Zeichnung gezeigten sowie in den Ansprüchen sowie in der Beschreibung erwähnten Merkmale jeweils einzeln für sich oder in beliebiger Kombination erfindungswesentlich sein. In der Zeichnung zeigen:

Figur 1    eine Draufsicht eines Kraftfahrzeugs mit einem Parkhilfesystem, wobei mit Hilfe eines Sensors des Parkhilfesystems Koordinaten eines als Bordsteinkante ausgebildeten Hindernisses ermittelt werden;

Figur 2    eine Darstellung, in der die ermittelten Koordinaten, die auf dieser Basis gefilterten Koordinaten und der tatsächliche Verlaufs des Hindernisses einander gegenübergestellt sind;

Figur 3    eine Veranschaulichung zur Herleitung der oben genannten Gleichung (1); und

Figur 4    eine Veranschaulichung zur Ermittlung eines Kreismittelpunkts eines kreisförmigen Koordinatenverlaufs.

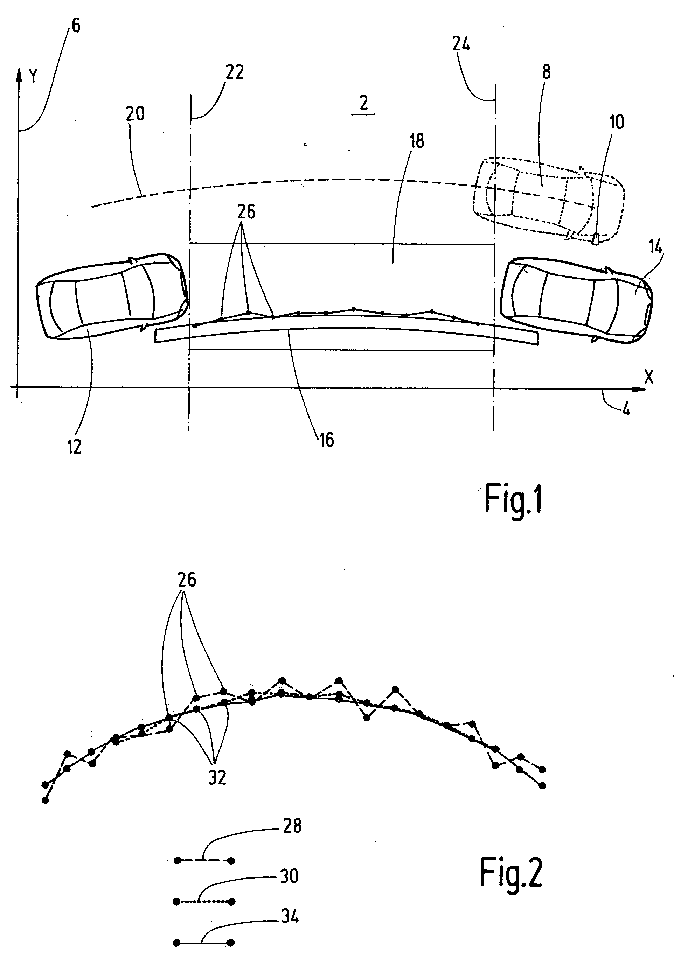

Figur 1 zeigt eine Ebene 2, die durch eine X-Achse 4 und eine Y-Achse 6 definiert ist. In dieser Ebene ist ein Kraftfahrzeug 8 angeordnet, das ein Parkhilfesystem aufweist, das einen Sensor 10 umfasst.

In der Ebene 2 sind zwei parkende Fahrzeuge 12 und 14 angeordnet, die entlang eines gekrümmt verlaufenden Hindernisses 16, das als Bordsteinkante ausgebildet sein kann, geparkt sind.

Die parkenden Fahrzeuge 12 und 14 sowie das Hindernis 16 begrenzen einen Parkraum 18. Wenn das Kraftfahrzeug 8 entlang einer mit 20 angedeuteten Fahrspur an dem Parkraum 18 vorbeifährt, kann zwischen einer von der Front des parkenden Fahrzeugs 12 definierten hinteren Grenze 22 bis hin zu einer durch das Heck des parkenden Fahrzeugs 14 definierten vorderen Grenze 24 die Begrenzung des Parkraums 18 entlang des Hindernisses 16 erfasst werden. Hierfür werden in vorgegebenen Zeitabständen Koordinaten 26 ermittelt. Diese Koordinaten 26 bilden einen in Figur 2 dargestellten ermittelten Verlauf 28 des Hindernisses 16.

Um den Verlauf 28 mit Hilfe einer Kurvenfunktion, insbesondere einer Kreisfunktion, beschreiben zu können, wird der Verlauf 28 gefiltert, so dass sich ein gefilterter Verlauf 30 mit gefilterten Koordinaten 32 ergibt. Die Koordinaten 32 sind gegenüber den entsprechenden Koordinaten 26 leicht versetzt und in ihrem Verlauf 30 geglättet.

In Figur 2 ist aus Übersichtsgründen außerdem der tatsächliche Verlauf 34 des Hindernisses 16 dargestellt.

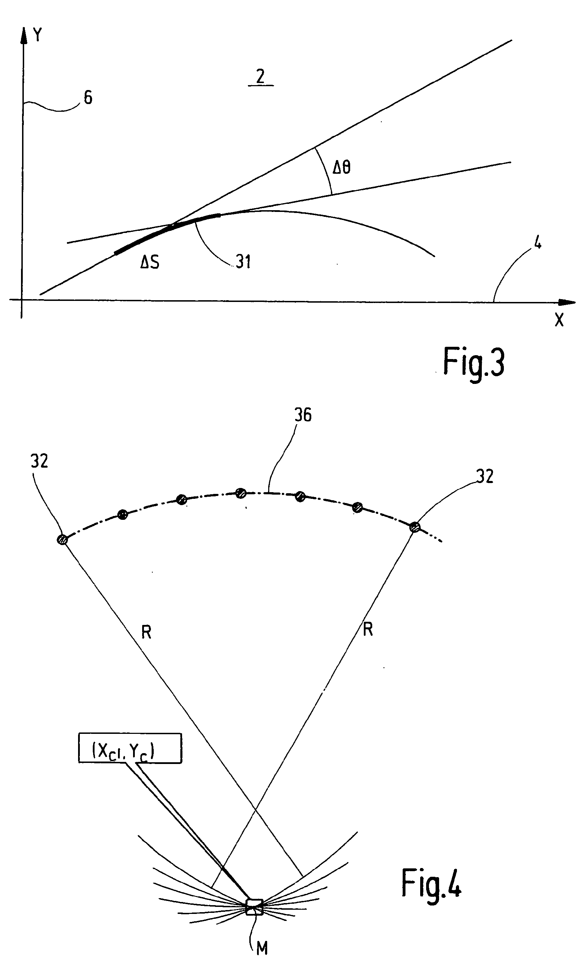

Wenn der in Figur 2 dargestellte gefilterte Koordinatenverlauf 30 bekannt ist, kann ein Koordinatenverlauf bestimmt werden, der sich durch eine Kreisform beschreiben lässt. Hierfür kann die Krümmung einer in Figur 3 dargestellten Kurve 31 wie folgt definiert werden:

$$k = \lim_{\Delta S \to 0} \frac{\Delta \theta}{\Delta S} \Rightarrow k = \frac{d\theta}{dS}.$$

Für einen kurvenförmigen Verlauf gilt:

$$y' = tg(\theta).$$

Hieraus folgt:

$$\theta = arctg(y').$$

Setzt man $\dot{y} = y'$ und differenziert $\theta$ über x, so ergibt sich:

$$\frac{d\theta}{dx} = \left(arctg(\dot{y})\right)' = arctg'(\dot{y}) \cdot (\dot{y})' = \frac{y''}{1 + y'^2} \qquad \text{(Gleichung (4))}$$

Gleichzeitig gilt:

$$\frac{dS}{dx} = \sqrt{1 + y'^2} \qquad \text{(Gleichung (5))}$$

Aus den Gleichungen (4) und (5) ergibt sich die gesuchte Krümmung:

$$k = \frac{d\theta}{dS} = \frac{y''}{\left(1 + y'^2\right)^{\frac{3}{2}}}. \qquad \text{(Gleichung (6))}$$

Mit Hilfe der Gleichung 6 kann für jede Koordinate 32 eine an dieser Koordinate anliegende Krümmung bestimmt werden. Diese Berechnung kann für alle Koordinaten 32 durchgeführt und ein Mittelwert gebildet werden. Der Kehrwert dieses Mittelwerts entspricht dem Radius eines Kreises, der den Verlauf der Koordinaten 32 beschreibt. In Kenntnis dieses Radius R kann mit Hilfe von mindestens zwei Koordinaten 32 ein Mittelpunkt M des entsprechenden Kreises ermittelt werden. Dies ist in Figur 4 dargestellt. Hieraus ergibt sich ein mit 36 bezeichneter bestimmter Koordinatenverlauf, der eine modellhafte Abbildung des tatsächlichen Verlaufs 34 des Hindernisses 16 ist. Auf Basis des Koordinatenverlaufs 36 kann ein Steuergerät des Parkhilfesystems des Kraftfahrzeugs 8 nunmehr eine optimale Trajektorie berechnen, um das Kraftfahrzeug 8 in den Parkraum 18 einparken zu können.

**Patentansprüche**

1. Verfahren zum Betrieb eines Parkhilfesystems eines Kraftfahrzeugs (8), wobei mit Hilfe von Sensoren (10) Koordinaten (26) von Hindernissen (16) in der Umgebung des Kraftfahrzeugs (8) ermittelt werden, wobei die Koordinaten (26) zur Bestimmung eines Koordinatenverlaufs (36) verwendet werden, der zumindest abschnittsweise gekrümmt ist und dem Verlauf eines Hindernisses (16) zumindest annähernd entspricht, **dadurch gekennzeichnet, dass** für jede Koordinate i (26, 32) der Wert der an dieser Koordinate (26, 32) anliegenden Steigung ($y_i'$) bestimmt wird, dass für jede Koordinate i (26, 32) der Wert der an dieser Koordinate (26, 32) anliegenden Krümmung ($y_i''$) bestimmt wird, und dass die Krümmung $k_i$ des Koordinatenverlaufs (36) an einer Koordinate i bestimmt wird durch:

$$k_i = \frac{y_i''}{\left(1 + y_i'^2\right)^{\frac{3}{2}}}$$

dass eine durchschnittliche Krümmung $k_{avg}$ des Koordinatenverlaufs (36) für eine Anzahl N der Koordinaten i (26, 32) bestimmt wird durch:

$$k_{avg} = \frac{\sum_{i=1}^{N} k_i}{N},$$

dass ein Radius R des Koordinatenverlaufs (36) bestimmt wird durch:

$$R = \frac{1}{\left|k_{avg}\right|},$$

dass in Kenntnis des Radius R des Koordinatenverlaufs (36) mit Hilfe von mindestens zwei Koordinaten (26, 32) die Lage des Mittelpunkts M eines Kreises bestimmt wird, und dass der Koordinatenverlauf (36) gleich einem Teilstück des Kreises mit Mittelpunkt M und Radius R ist.

2. Verfahren nach Anspruch 1, **dadurch gekennzeichnet, dass** zur Bestimmung des Koordinatenverlaufs (36) die von einem einzelnen Hindernis (16) ermittelten Koordinaten (26) verwendet werden.

3. Verfahren nach Anspruch 2, **dadurch gekennzeichnet, dass** das einzelne Hindernis (16) eine im Bereich zwischen zwei parkenden Autos entlang einer Parklücke verlaufende, gekrümmte Bordsteinkante ist.

4. Verfahren nach mindestens einem der vorhergehenden Ansprüche, **dadurch gekennzeichnet, dass** die Koordinaten (26) zur Vorbereitung der Bestimmung des Koordinatenverlaufs gefiltert werden.

5. Verfahren nach mindestens einem der vorhergehenden Ansprüche, **dadurch gekennzeichnet, dass** die Lage des Mittelpunkts M eines Kreises durch Triangulation bestimmt wird.

6. Verfahren nach mindestens einem der vorhergehenden Ansprüche, **dadurch gekennzeichnet, dass** nach Bestimmung eines Koordinatenverlaufs (36) geprüft wird, ob eine Koordinate i (26, 32) mit dem Koordinatenverlauf (36) korreliert.

7. Parkhilfesystem für Kraftfahrzeuge (8), ausgebildet zur Durchführung eines Verfahrens nach mindestens einem der vorhergehenden Ansprüche.

**Claims**

1. Method for operating a parking aid system of a motor vehicle (8), wherein coordinates (26) of obstacles (16) in the vicinity of the motor vehicle (8) are established with the aid of sensors (10), wherein the coordinates (26) are used to determine a coordinate curve (36), which is curved at least in sections and at least approximately corresponds to the curve of an obstacle (16), **characterized in that**, for each coordinate i (26, 32), the value of the gradient ($y_i'$)

present at this coordinate (26, 32) is determined, **in that**, for each coordinate i (26, 32), the value of the curvature ($y_i''$) present at this coordinate (26, 32) is determined, and **in that** the curvature $k_i$ of the coordinate curve (36) at a coordinate i is determined by:

$$k_i = \frac{y_i''}{\left(1 + y_i'^2\right)^{\frac{3}{2}}}$$

in that an average curvature $k_{avg}$ of the coordinate curve (36) for a number N of coordinates i (26, 32) is determined by:

$$k_{avg} = \frac{\sum_{i=1}^{N} k_i}{N} \, ,$$

in that a radius R of the coordinate curve (36) is determined by:

$$R = \frac{1}{\left| k_{avg} \right|} \, ,$$

in that, with knowledge of the radius R of the coordinate curve (36), the position of the centre M of a circle is determined with the aid of at least two coordinates (26, 32), and **in that** the coordinate curve (36) equals a portion of the circle with centre M and radius R.

2. Method according to Claim 1, **characterized in that**, for determining the coordinate curve (36), use is made of the coordinates (26) established from an individual obstacle (16).

3. Method according to Claim 2, **characterized in that** the individual obstacle (16) is a curved kerb extending along a parking space in the region between two parking cars.

4. Method according to at least one of the preceding claims, **characterized in that** the coordinates (26) are filtered for preparing the determination of the coordinate curve.

5. Method according to at least one of the preceding claims, **characterized in that** the position of the centre M of a circle is determined by triangulation.

6. Method according to at least one of the preceding claims, **characterized in that**, after determining a coordinate curve (36), a check is carried out as to whether a coordinate i (26, 32) correlates with the coordinate curve (36).

7. Parking aid system for motor vehicles (8), embodied to carry out a method according to at least one of the preceding claims.

**Revendications**

1. Procédé de mise en fonctionnement d'un système d'aide au stationnement d'un véhicule automobile (8), dans lequel des coordonnées (26) d'obstacles (16) se trouvant dans l'environnement du véhicule (8) sont déterminées à l'aide de capteurs (10), dans lequel les coordonnées (26) sont utilisées pour déterminer une courbe de coordonnées (36) qui est incurvée au moins par sections, et qui correspond au moins approximativement à la courbe d'un obstacle (16), **caractérisé en ce que**, pour chaque coordonnée i (26, 32), la valeur de la pente ($y_i'$) à l'emplacement de ladite coordonnée (26, 32) est déterminée, **en ce que**, pour chaque coordonnée i (26, 32), la valeur de la courbure ($y_i''$) est déterminée à l'emplacement de ladite coordonnées (26, 32), et **en ce que** la courbure $k_i$ de la courbe de coordonnées (36) est déterminée à l'emplacement d'une coordonnée i conformément à :

$$k_i = \frac{y''_i}{(1+y'^2_i)^{\frac{3}{2}}},$$

en ce qu'une courbure moyenne $k_{avg}$ de la courbe de coordonnées (36) est déterminée pour un nombre N des coordonnées i (26, 32) conformément à :

$$k_{avg} = \frac{\sum_{i=1}^{N} k_i}{N},$$

**en ce qu'**un rayon R de la courbe de coordonnées (36) est déterminé par :

$$R = \frac{1}{\left| k_{avg} \right|},$$

en ce que, connaissant le rayon R de la courbe de coordonnées (36), la position du centre M d'un cercle est déterminée à l'aide d'au moins deux coordonnées (26, 32), et **en ce que** la courbe de coordonnées (36) est identique à une partie du cercle de centre M et de rayon R.

2. Procédé selon la revendication 1, **caractérisé en ce que**, pour déterminer la courbe de coordonnées (36), on utilise les coordonnées (26) déterminées pour un obstacle (16) individuel.

3. Procédé selon la revendication 2, **caractérisé en ce que** l'obstacle (16) individuel est un bord de trottoir incurvé s'étendant dans la région comprise entre deux autos en cours de stationnement le long d'un emplacement de stationnement.

4. Procédé selon au moins l'une des revendications précédentes, **caractérisé en ce que** les coordonnées (26) sont filtrées en préparation à la détermination de la courbe de coordonnées.

5. Procédé selon au moins l'une des revendications précédentes, **caractérisé en ce que** la position du centre M d'un cercle est déterminée par triangulation.

6. Procédé selon au moins l'une des revendications précédentes, **caractérisé en ce qu'**après la détermination d'une courbe de coordonnées (36), il est vérifié si une coordonnée i (26, 32) est corrélée avec la courbe de coordonnées (36).

7. Système d'aide au stationnement pour véhicules automobiles (8), conçu pour mettre en oeuvre un procédé selon au moins l'une des revendications précédentes.

Fig.1

Fig.2

Fig.3

Fig.4

**EP 2 087 369 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0305907 A1
- EP 1428722 A2
- WO 2004042423 A1
- WO 2006090736 A1
- EP 1679713 A1
- EP 1683707 A1